# EUROPEAN PATENT APPLICATION

(11) **EP 4 549 232 A1**
(43) Date of publication of application: **07.05.2025**
(21) Application number: 23207222.3
(22) Date of filing: 31.10.2023
(51) Int. Cl.: B60L 53/63, B60L 53/66, B60L 53/68, B60L 58/12

(54) **CHARGING A PLURALITY OF ELECTRIC VEHICLES**

(71) Applicant: ryd GmbH, 80339 München (DE)
(72) Inventor: Götz, Marcus, 80339 München (DE); Malek, Moni, 80339 München (DE)
(74) Representative: Keller Schneider Patentanwaltsgesellschaft mbH

(57) **Abstract**

A computer-implemented method comprises receiving (40) a first status message (30.1) from a first on-board unit (18.1) of a first vehicle, the first status message (30.1) indicating a charging status of an ongoing operation of charging the first vehicle. A server system (20) determines (44) a predicted time when charging a second vehicle instead of the first vehicle would be preferable. At least one of a first instruction message (32.1) and a second instruction message (32.2) is/are transmitted (46, 48), wherein the first instruction message (32.1) indicates that the ongoing operation of charging the first vehicle is to be stopped at the predicted time and the second instruction message (32.2) indicates that a new operation of charging the second vehicle is to be commenced at the predicted time. A machine-readable medium and a system comprise corresponding features.

## Description

### FIELD OF THE INVENTION

The present invention generally relates to the field of charging electric vehicles, and more particularly to the field of charging a plurality of electric vehicles at one or more charging stations.

### BACKGROUND OF THE INVENTION

Electric vehicles have become ubiquitous. However, given the present state of the art in battery technology, charging an electric vehicle generally takes longer than filling a fuel tank of a gasoline-powered vehicle. Furthermore, as the number of electric vehicles on the streets grows, there is often a lack of available charging stations. During busy times, all charging stations within easy reach may be occupied, leading to undesirable wait times. This is especially true for high-powered DC (Direct Current) charging stations, as even large charging installations tend to have only a small number of charging stations according to the latest available technology.

Particular difficulties arise for fleet operators having many electric vehicles.

First, in the case of commercial vehicles and professional drivers, any time spent waiting for a free charging station directly translates into a monetary loss.

Second, the fleet operators may have contractual agreements with one or more, but not all, operators of charging installations, which may limit the choice of charging installations and/or charging stations that can be used in an economical way. This also applies if the fleet operator has its own charging installation(s) that should preferably or exclusively be used, as it would not be economical for the fleet operator to provide such a large number of charging stations that no scarcity exists even at peak times.

Third, usage of the vehicles of a commercial fleet is generally not evenly distributed, but may show certain patterns, such as little usage during weekends, or high usage peaks at the beginning of each working day.

Accordingly, a need exists to minimize waiting times and/or maximize the amount of electrical energy a given charging installation can charge into a plurality of electric vehicles.

### OBJECTS AND SUMMARY OF THE INVENTION

It is an object of the present invention to facilitate efficient charging operations of electric vehicles at a limited number of charging stations.

The present invention is defined by the independent claims. The dependent claims concern optional features of some embodiments of the invention. Due account shall be taken of any element which is equivalent to an element specified in the claims.

The present invention is based on the insight that, when operating a fleet of vehicles, not only the requirements of charging each individual vehicle should be taken into account, but also the requirement of making the best possible use of a limited number of charging stations. The typical charging curves of electric vehicles imply that it may be preferable to end charging operations relatively early, so that advantage may be taken of the high permissible charging rates at low states of charge of a vehicle battery. This teaching is based on the technical properties of electric vehicle batteries.

Unless stated otherwise in the claims, the order in which operations and method steps are recited in the claims should not be construed as limiting. It is apparent that many of these operations and method steps can be performed in a different order or wholly or partially parallel or wholly or partially interleaved with each other.

The machine-readable medium according to the present disclosure may comprise suitable program instructions to realize the recited operations, for example on a general-purpose computer, or on a device comprising a processor, or in a programmable integrated circuit. The machine-readable medium may be any kind of transitory or non-transitory data carrier like, for example, a hard disk, or an optical data carrier, or a semiconductor memory, or a signal transmitted via a carrier wave over a computer network. In some embodiments, the machine-readable medium is a tangible and/or non-transitory data carrier, which excludes carrier waves.

### BRIEF DESCRIPTION OF THE DRAWINGS

Further features, objects and advantages of the invention will become apparent from the following detailed description, in connection with the annexed schematic drawings, in which:
Fig. 1 shows a schematic representation of a charging installation, vehicles to be charged, and a server system according to one or more embodiments of the present disclosure.
Fig. 2 shows a schematic representation of a known charging curve.
Fig. 3 shows an example flow of operations of a process for facilitating efficient charging according to one or more embodiments of the present disclosure.
Fig. 4 shows an example flow of operations of a process for recommending a time or time period for commencing a charging operation according to one or more embodiments of the present disclosure.

### DETAILED DESCRIPTION OF EMBODIMENTS OF THE INVENTION

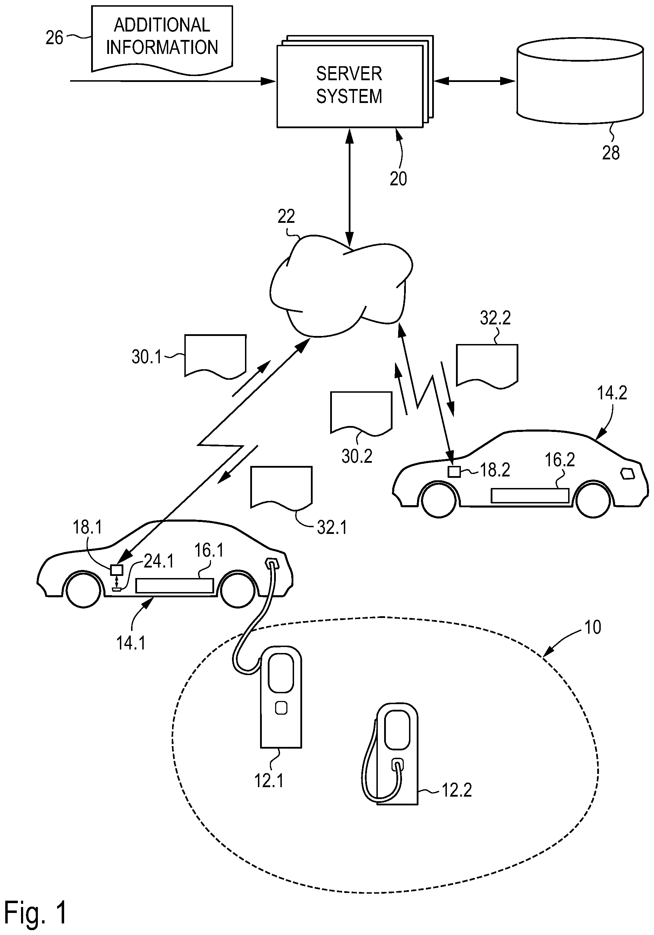

Fig. 1 shows a charging installation 10 with a number of charging stations, which are collectively designated as charging stations 12.x in the present document. Fig. 1 exemplarily shows just two charging stations 12.1, 12.2, but it is apparent that any number of charging stations 12.x - ranging from a single one to tens or even more - can be provided. In various embodiments, the charging stations 12.x may all have identical properties or may have different properties, in particular with respect to the maximum available charging rate (e.g., 11 kW or 22 kW or 150 kW or 250 kW or any other value).

Fig. 1 further shows two electric vehicles 14.1, 14.2, each of which comprising a rechargeable battery 16.1, 16.2 and an on-board unit 18.1, 18.2. These entities are collectively designated as vehicles 14.x, batteries 16.x, and on-board units 18.x, respectively. The battery 16.x is the main or driving battery of the vehicle 14.x. A typical capacity of the battery 16.x in presently available vehicles 14.x may be in the range of 50 kWh to 100 kWh, but the invention is not limited to any particular capacity or chemical composition or technology of the battery 16.x. As shown in the example of Fig. 1, the first vehicle 14.1 is currently connected to the first charging station 12.1 and is engaged in an ongoing charging operation, whereas the second vehicle 14.2 is currently not connected to any charging station.

Further components of the vehicle 14.x, such as one or more electric driving motor(s), steering and breaking components, and so on, are commonly known and a not shown in Fig. 1 in order to avoid cluttering the drawings. Similarly, it is apparent that the number of just two vehicles 14.x shown in Fig. 1 is only intended as a non-limiting example. In some embodiments, the vehicles 14.x are part of a vehicle fleet managed by a fleet operator. For example, the fleet operator may be an enterprise having its own fleet of cars, or a car rental/leasing entity, or a service company providing dedicated fleet management services. In practical cases, the size of the fleet may be, for example and without limitation, tens or hundreds or thousands of vehicles, and some or all of the vehicles of the fleet may be electric vehicles 14.x.

The on-board units 18.x may be implemented in different ways, such as, without limitation, (i) using internal hardware in the vehicle 14.x, and/or (ii) using an external device connected to the vehicle 14.x via an on-board diagnostic interface, and/or (iii) as a software implementation running on a computer system of the vehicle 14.x, and/or (iv) as a software module or application running on a device (such as a smartphone) located in or near the vehicle. These and further possibilities will be explained in more detail below. Some embodiments may use a particular implementation of the on-board units 18.x, but there are also embodiments in which different implementations of the on-board units 18.x are used together. Generally speaking, the on-board units 18.x are adapted to measure or determine or receive certain pieces of information of interest, and to communicate these pieces of information with an external server system 20. The pieces of information may include, for example and without limitation, state of charge information regarding the respective batteries 16.x, state of health information regarding the respective batteries 16.x, temperature information regarding the respective batteries 16.x, and/or range to drive information regarding the respective vehicles 14.x. In many embodiments, each on-board unit 18.x is just a piece of software executed by a computer system of the vehicle 14.x, but several other implementations are possible, as further explained below.

Each of the on-board units 18.x is adapted to communicate with the server system 20 via a network 22. The network 22 may comprise any combination of wired and wireless networks, including any one or more of (i) the Internet, (ii) mobile data communication networks according to various standards and technologies (e.g., 3G, 4G, 5G, and so on), and/or (iii) local wired or wireless networks.

In a manner known as such, the server system 20 may comprise any number of physical or virtual servers, which are not individually shown in Fig. 1. As non-limiting examples, the server system 20 may consist of a single dedicated hardware server, or may comprise a local installation of a few interconnected physical or virtual servers, or may be implemented as a service provided by a large cloud computing installation, such as one of the services commercially available under the names or trademarks AWS, Microsoft Azure, Google Cloud, and so on. In many embodiments, the various functions provided by the server system 20 are distributed between a plurality of servers, which may be operated by different entities. For example, the server system 20 may comprise one or more servers operated by the car manufacturer to provide "connected car" functionality, in conjunction with one or more servers operated by a provider of fleet management services. Generally speaking, the distribution of functions between individual servers of the server system 20 may be chosen according to technical and/or administrative requirements.

Besides receiving the information from the on-board units 18.x, the server system 20 has access to additional required or useful information 26, which will be further explained below. Non-limiting examples of this additional information 26 include one or more of weather reports, traffic predictions, and power grid data. Yet further, a database 28 may be accessible by or incorporated into the server system 20. The database 28 may include, without limitation, information such as a listing of the locations of available charging stations 12.x, and/or a listing of identifications of electric vehicles 14.x which are part of the managed fleet.

The respective on-board unit 18.x of each electric vehicle 14.x is adapted to access certain information related to the vehicle 14.x and its battery 16.x, and to convey this information to the server system 20 via the network 22. As will be explained in more detail below, according to non-limiting examples this information may include any one or more of a current state of charge or a current charging current or a current temperature of the battery 16.x. The on-board unit 18.x may generally be any unit comprising one or more hardware and/or software components. The on-board unit 18.x may be retrofitted (i.e., not present in the vehicle 14.x as originally delivered from the factory), or it may be factory-installed as part of the original vehicle configuration.

In the example shown in Fig. 1, the on-board unit 18.1 is configured as a compact hardware device ("dongle") plugged into a control or diagnosis port 24.1 of the vehicle 14.1, such as an OBD, OBD2, or EOBD port. According to an embodiment, the on-board unit 18.1 is configured as an embedded computer having an interface unit connected to the port 24.1, a location determining unit, and a wireless communication unit. The on-board unit 18.1 obtains the information related to the vehicle 14.1 and its battery 16.1 from the vehicle 14.1 via the port 24.1, and further determines the current location of the vehicle 14.1 from signals of a global navigation satellite system (GNSS), such as one of the systems commonly known as GPS or GLONASS or Galileo or BeiDou.

In other embodiments, the on-board unit 18.x is implemented not as a dedicated hardware device, but rather as a software module which runs on available hardware, such as a control system or an entertainment system or a navigation system or a user interface system of the vehicle 14.x. Fig. 1 shows, as an example, the vehicle 14.2 equipped with such an on-board unit 18.2 in the form of a piece of software. The on-board unit 18.2 obtains the required information (such as battery-related information and location information) from the vehicle 14.2, and uses a mobile data communication unit of the vehicle 14.2 to communicate with the server system 20 via the network 22. The embodiments described in the present paragraph include embodiments in which the software module that implements the on-board unit 18.2 is part of the standard software of the vehicle 14.2 and the presently discussed information is part of the information the vehicle 14.2 transmits to a server of the vehicle manufacturer in any case to provide a so-called "connected car" functionality or telematics services.

In yet further embodiments, the on-board unit 18.x is implemented as a software module or "app" running on a mobile device such as a mobile phone or smartphone or similar device of a driver of the vehicle 14.x or a passenger. In this case, the on-board unit 18.x may obtain all or part of the required information (such as battery-related information) from the vehicle 14.x, and further information from other sources (such as location information from a GNSS receiver of the mobile device). The on-board unit 18.x may further use any available means (such as a mobile data communication unit of the vehicle 14.x or of the mobile device) to communicate data to and from the server system 20 via the network 22.

The previously described embodiments can also be combined to obtain embodiments in which different hardware units (including, but not limited to two or all of (i) vehicle hardware, (ii) dedicated additional hardware, and (iii) mobile devices located within the vehicle) work together to implement the functions of the on-board unit 18.x. As a non-limiting example, vehicle hardware may be used to send the data to the server system 20, while information received from the server system 20 and intended for a user may be displayed on a screen of a mobile device or played via a speaker of the mobile device.

As a non-limiting example, Fig. 1 shows a first status message 30.1 communicated from the on-board unit 18.1 of the first vehicle 14.1 to the server system 20, and a second status message 30.2 communicated from the on-board unit 18.2 of the second vehicle 14.2 to the server system 20, a first instruction message 32.1 communicated from the server system 20 to the first on-board unit 18.1, and a second instruction message 32.2 communicated from the server system 20 to the second on-board unit 18.2. These messages will be described in more detail below.

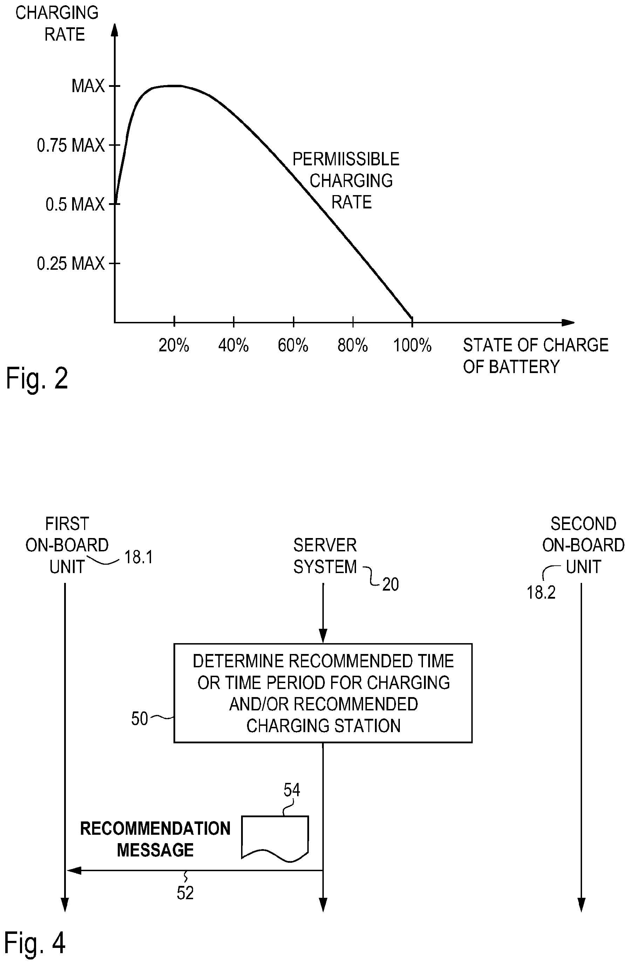

Fig. 2 shows, as a non-limiting example, a schematic charging curve of a typical electric vehicle 14.x for a high-powered DC charging station 12.x. This charging station 12.x may support, for example, a maximum charging rate of 250 kW, but the battery 16.x can only be charged at this maximum rate under a narrow range of conditions, such as when the state of charge of the battery 16.x is between 5% and 25%. If the state of charge of the battery 16.x is higher than about 25%, then the permissible charging rate gradually drops until it reaches only a small percentage of the maximum charging rate when the state of charge is close to 100%. Further factors such as the temperature of the battery 16.x also influence the permissible charging rate; these factors are not shown in Fig. 2. As a rule of thumb, a typical electric vehicle 14.x supports good charging rates when the state of charge is between 10% and 60%.

Each vehicle model and configuration has its own specific charging curve, which is carefully determined by the vehicle manufacturer to balance disparate requirements, such as the requirement for rapid charging and the requirement to avoid premature wear of the battery 16.x. For each vehicle in the fleet, the vehicle's charging curve and further information such as the dependency of the charging curve from the vehicle's current battery temperature are available to the server system 20 as additional information 26 or information stored in the database 28.

Based on the example charging curve shown in Fig. 2, an essentially empty battery 16.x can be charged to around 50% capacity in 15 minutes, while it takes more than 40 minutes to achieve an above 90% charge state. If a single vehicle 14.x is to be charged at an available charging station 12.x, then a determination when to end the charging operation can be made solely based on factors such as the remaining distance to the destination, a battery state preselected at the client side, the next charging station on a preselected route, and/or any of a wide variety of further influencing factors.

However, the situation is more difficult if multiple vehicles 14.x of a fleet are to be charged while there is a shortness of available charging stations 12.x. For example, in the following it will be assumed that both the first vehicle 14.1 and the second vehicle 14.2 should be charged at the first charging station 12.1, as the second charging station 12.2 may be out of order or not be available to the fleet operator. In this case, it is preferable to base the charging decisions not only on the requirements of each individual vehicle 14.1, 14.2, but also on the requirement to utilize the charging capacity of the first charging station 12.1 as efficiently as possible. The result of this determination may be that it is preferable to stop the charging operation of the first vehicle 14.1 relatively early (i.e., while the permissible charging rate is still high), and switch to charging the second vehicle 14.2. For example, if the operation of charging the first vehicle 14.1 is stopped when the first vehicle 14.1 reaches a 50% charge, then the vehicles 14.1 and 14.2 can be charged to 50% of their capacity in a total of 30 minutes, while it would take considerably longer to charge the first vehicle 14.1 to 70% of its capacity and the second vehicle 14.2 to 30% of its capacity.

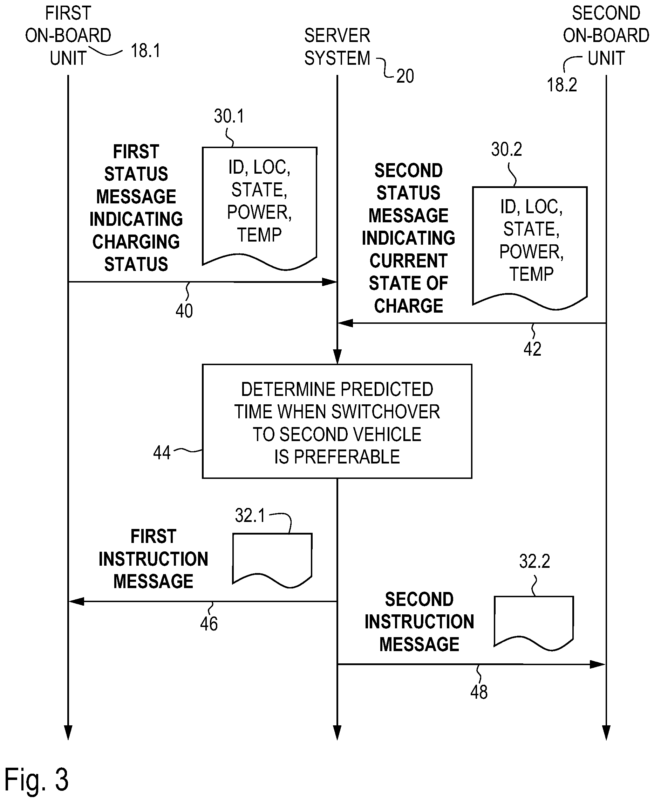

Fig. 3 shows an exemplary process for facilitating efficient charging according to embodiments of the present disclosure. The process shown in Fig. 3 starts in a situation in which the first vehicle 14.1 is being charged at the first charging station 12.1 and the second vehicle 14.2 needs to be charged. It is assumed that only the first charging station 12.1 is available for charging the second vehicle 14.2. The second vehicle 14.2 may be located near the first charging station 12.1 or at some distance.

During the ongoing charging operation, the on-board unit 18.1 of the first vehicle 14.1 repeatedly transmits, in step 40, first status messages 30.1 to the server system 20. Each first status message 30.1 includes identifying information and indicates a charging status of the ongoing charging operation of the first vehicle 14.1. In the example shown in Fig. 3, the first charging message 30.1 includes, without limitation, the following pieces of information:
- an identifier (ID) of the first vehicle 14.1 or the first on-board unit 18.1,
- location information (LOC) which indicates a current location of the first vehicle 14.1 or the first on-board unit 18.1,
- a current state of charge (STATE) of the battery 16.1 of the first vehicle 14.1, such as the information that the battery 16.1 is currently 50% charged or the information how many kWh of electrical energy are currently available in the battery 16.1,
- a current charging power (POWER) applied to the battery 16.1, such as the information that the battery 16.1 is currently being charged with 95 kW of power, and
- a current temperature (TEMP) of the battery 16.1, such as the information that the battery 16.1 currently has an internal temperature of 40 °C.

Further embodiments may use first status messages 30.1 which include additional and/or different pieces of information. In any case, the information in the first status messages 30.1, considered in conjunction with any information which is available to the server system 20 from other sources, should be sufficient for the server system 20 to determine the current charging status of the ongoing operation of charging the first vehicle 14.1.

In various embodiments, the first charging messages 30.1 may be sent at regular time intervals during the ongoing charging operation, or they may be sent in response to certain triggering events, such as whenever an additional percentage point of electrical energy has been charged into the battery 16.1 of the first vehicle 14.1.

In the embodiment shown in Fig. 3, the server system 20 further receives, in step 42, a second status message 30.2 from the second vehicle 14.2. The second status message 30.2 comprises information necessary or desirable for the determination whether, and at what predicted time, it is preferable to charge the second vehicle 14.2 instead of the first vehicle 14.1. Generally speaking, the pieces of information provided in the second status message 30.2 may be similar to the ones provided in the first status message 30.1, except for differences caused by the fact that there is no ongoing operation of charging the second vehicle 14.2. As a non-limiting example, the second status message 30.2 may comprise the following pieces of information:
- an identifier (ID) of the second vehicle 14.2 or the second on-board unit 18.2,
- location information (LOC) which indicates a current location of the second vehicle 14.2 or the second on-board unit 18.2,
- a current state of charge (STATE) of the battery 16.2 of the second vehicle 14.2, such as the information that the battery 16.2 is currently 10% charged or the information how many kWh of electrical energy are currently available in the battery 16.2,
- a current power consumption (POWER) of the second vehicle 14.2 such as the information that the second vehicle 14.2 is currently being driven and consumes 10 kW of power from the battery 16.2, and
- a current temperature (TEMP) of the battery 16.2, such as the information that the battery 16.2 currently has an internal temperature of 30 °C.

While many embodiments use comprehensive status messages sent by the vehicle(s) 14.x waiting to be charged - such as the second status message 30.2 described above or status messages with even more information -, the invention also comprises embodiments in which the second status message 30.2 comprises only a minimal amount of information, and even embodiments which do not require second status messages 30.2 to be sent in all circumstances. For example, if there are several vehicles 14.x in a parking lot of a fleet operator on a workday morning, it may be assumed that all of these vehicles 14.x should be charged even if no explicit second status messages 30.2 are sent. As another example, the current state of charge of each battery 16.x of each vehicle 14.x may be available in the database 28 from other sources and may be sufficient information so that no second status messages 30.2 are necessary.

Step 44 shown in Fig. 3 involves the server system 20 determining a predicted time when it would be preferable to switch over the charging operation at the first charging station 12.1 from charging the first vehicle 14.1 to charging the second vehicle 14.2. As mentioned above, one important factor for this determination in step 44 is a determination how charging the second vehicle 14.2 instead of the first vehicle 14.1 would affect utilization of a charging capacity of the first charging station 12.1, given the respective charging curves for the first and second vehicles 14.1, 14.2 as shown in Fig. 2. For example, as the actual charging rate of the first vehicle 14.1 becomes lower and lower during the ongoing charging operation, it becomes more and more attractive to switch to charging the second vehicle 14.2 which can be expected to make better use of the charging capacity of the first charging station 12.1.

In many embodiments, maximizing utilization of the charging capacity of the first charging station 12.1 is not the only factor taken into account in the determination of the predicted time in step 44. For example, it may be desirable to charge each of the first and second vehicles 14.1, 14.2 to a respective minimum amount of electrical energy. This minimum amount may be a threshold which applies to all vehicles 14.x - such as charging to at least 50% capacity -, or it may be an amount individually determined for each vehicle 14.x - such as an amount based on the distance of a particular vehicle 14.x to its intended destination or to the next charging station 12.x on the way. For example, if the intended destination of the first vehicle 14.1 requires a 60% state of charge, then it may be preferable to charge the first vehicle 14.1 to a bit more than 60% even if this will lead to a slightly lower overall utilization of the first charging station 12.1.

In embodiments which take several factors into account when determining the predicted time for changing the charging operation from the first vehicle 14.1 to the second vehicle 14.2, these factors are often evaluated according to their costs and benefits - expressed according to any suitable metrics - and the approach with minimum costs and/or maximum benefits is taken. Utilization of the charging capacity of the first charging station 12.1 - which depends on the charging curves of the vehicles involved - is always taken into account.

In many embodiments, the predicted time determined in step 44 is a time in the future. The server system 20 extrapolates the expected charging rate based on the vehicle's charging curve and further available information, and predicts a future time when it will become preferable to change over from charging the first vehicle 14.1 to charging the second vehicle 14.2. In embodiments in which comprehensive information regarding the second vehicle 14.2 is available and the second vehicle 14.2 is moving, step 44 may also include the server system 20 extrapolating the future development of the state of charge of the battery 16.2 of the second vehicle 14.2.

Determining a time in the future as the predicted time has the benefit that it allows the drivers of both vehicles 14.1, 14.2 to prepare for switching over the charging operation. For example, the drivers may have sufficient time to return to their respective vehicles 14.1, 14.2 and perform any necessary actions to be ready for the switchover as soon as the predicted point in time arrives. This may also involve the driver of the second vehicle 14.2 queueing for use of the first charging station 12.1 after the first vehicle 14.1. This avoids the risk that another vehicle might block the first charging station 12.1 if the first vehicle 14.1 leaves before the second vehicle 14.2 arrives.

In some embodiments, the time interval by which the predicted time is in the future is fixed and may be, for example and without limitation, 5 minutes or 10 minutes. In other embodiments, the time interval may depend on one or more further factors, such as the duration of the charging operation so far (which influences the likelihood that the driver of the first vehicle 14.1 might have left the vehicle), or a determination whether the drivers are present in their respective vehicles 14.1, 14.2, or a size of the overall charging installation 10. Furthermore, in embodiments in which the second vehicle 14.2 might still be driving when the determination is made, the time interval may depend on the distance between the second vehicle 14.2 and the first charging station 12.1, so that there is sufficient time available for the second vehicle 14.2 to arrive at the first charging station 12.1 before the predicted time.

The invention further comprises embodiments in which the predicted time is the present time, with the consequence that the switchover should be made as soon as the predicted time is determined in step 44. This may render the prediction process more accurate, but it may make the switchover more prone to mishaps, as exemplified above.

In steps 46 and 48, the predicted time is communicated to the first and second on-board units 18.1, 18.2. More in detail, the server system 20 transmits a first instruction message 32.1 to the first on-board unit 18.1, and further transmits a second instruction message 32.2 to the second on-board unit 18.2. As explained above, the on-board units 18.1, 18.2 may consist of or comprise any device that is part of or located in the vehicle 14.1, 14.2, as well as any device associated with a respective driver or passenger of the vehicle 14.1, 14.2, including a smartphone. The invention comprises embodiments in which both the first and the second instruction messages 31.1, 31.2 are being sent, as well as embodiments which employ only a first instruction message 31.1 sent to the first on-board unit 18.1, and embodiments which employ only a second instruction message 32.2 sent to the second on-board unit 18.2. These embodiments are feasible because, in some cases, the instructions to one of the drivers of one of the vehicles 14.1, 14.2 may be conveyed by other means, such as via the driver of the other one of the vehicles 14.1, 14.2.

The first instruction message 32.1 indicates that the ongoing operation of charging the first vehicle 14.1 is to be stopped at the predicted time. In some embodiments, the first instruction message 32.1 may be a human-readable message and may just ask the driver of the first vehicle 14.1 to stop the ongoing charging operation and make the first charging station 12.1 available for the second vehicle 14.2. The server 20 and/or the first on-board unit 18.1 may send one or more reminder messages as the predicted time is approaching, and may request and process an acknowledgement action from the driver of the first vehicle 14.1. Alternatively or additionally, the first instruction message 32.1 may also be processed automatically, so that the ongoing charging operation is stopped at the predicted time.

Similarly, the second instruction message 32.2 sent in step 48 indicates that a new operation of charging the second vehicle 14.2 at the first charging station 12.1 is to be commenced at the predicted time. In various embodiments, the second instruction message 32.2 may be human-readable, automatically processed, or both. For example, in some embodiments the second instruction message 32.2 may comprise location information of the first charging station 12.1, and may be used to automatically program a navigation facility of the second vehicle 14.2 with the first charging station 12.1 as a destination. Depending on the capabilities of the second vehicle 14.2, the second vehicle 14.2 may then use fully or partially autonomous driving functions to navigate to the first charging station 12.1.

As explained above, the first instruction message 32.1 and/or the second instruction message 32.2 may be sent, in different embodiments, either at the predicted time or some time interval earlier, to allow the drivers of both vehicles 14.1, 14.2 to prepare for the switchover, and to allow, if applicable, the second vehicle 14.2 to reach the first charging station 12.1 at the predicted time.

While the explanation above pertained to only two vehicles 14.1, 14.2 which are to be charged at a single charging station 12.1, it is apparent that the teachings of the present disclosure are applicable to any number of vehicles 14.x and any number of charging stations 12.x, as long as there is a certain shortage of charging stations 12.x.

According to a further aspect of the presently disclosed subject matter, the server system 20 can be configured so that it not only determines a predicted time for switching between vehicles 14.x in a charging process, but also determines a recommended time or time interval when charging an electric vehicle 14.x would be particularly economical. This aspect is also considered as new and non-obvious in its own right, no matter whether or not the further functionality related to the switchover operation is present. However, the combination of both aspects is especially beneficial, as there may be a marked shortage of charging stations 12.x if many vehicles 14.x of a fleet are to be charged at or around a recommended time when charging is particularly economical.

Determining a recommended time or time period for a charging operation is based on the observation that today's electrical grids use more and more energy from renewable sources. This leads to huge swings in electricity prices. During sunny and windy times, operators of conventional power plants (e.g., gas, coal, nuclear, etc.) generate excess electricity over the market's requirements and need to sell power at a negative price so that an excess demand is created to maintain electric grid stability. This happens in Germany around 200 hours per year or 4 hours every week. Shutting down a coal plant takes more than 35 minutes and is associated with high costs. Therefore, operators of such power plants prefer selling at a negative price than powering the plant down for a short period of time.

Fig. 4 shows an exemplary process in which the server system 20 determines, in step 50, a recommended time or time period for commencing the operation of charging the first vehicle 14.1 at the first charging station 12.1. The recommended time is communicated to the on-board unit 18.1 of the first vehicle 12.1 via a recommendation message 54. In further embodiments, the recommendation message 54 may alternatively or additionally be sent to a driver of the first vehicle 14.1 or to another person (e.g., an authorized person of a fleet operator) by other means, such as to the driver's or other person's smartphone. It is apparent that the process shown in Fig. 4 can not only be used for the single first vehicle 14.1, but that similar recommendation messages 54 - which may contain identical or different (e.g., staggered) recommended times - may be sent with respect to many further vehicles 14.x, such as all vehicles of a particular fleet. Alternatively or additionally, the recommendation message 54 may also contain information which charging station 12.x a particular vehicle 14.x should use.

As mentioned above, the determination in step 50 may occur prior to the operations shown in Fig. 3 in embodiments which combine both aspects. However, the process of Fig. 4 is also regarded an invention in its own right, i.e., without the further operations of Fig. 3. According to the presently described embodiment, the determination in step 50 uses one or more or all of the following pieces of information:
- current state of charge of the battery 18.1,
- electricity price model (such as, without limitation, EPEX - European Power Exchange - publicly quoted pricing),
- weather reports for various regions and various time periods and their impact on renewable energy,
- locations and availability of charging stations 12.x that suit a profile of the vehicle 14.x and/or the vehicle's fleet,
- state of charge of the respective batteries 18.x of electric vehicles 14.x across a swarm of users,
- traffic predictions,
- historical and/or real-time data of power grid fluctuations, and
- behavioral prediction of users of electric vehicles 14.x based on driving and charging history.

The above pieces of information, insofar as they are used in a particular embodiment, are available to the server system 20 as parts of the additional information 26 or from the database 28.

In an embodiment, the server system 20 monitors the first vehicle 14.1 or all vehicles 14.x of a fleet so that the state of charge of each monitored vehicle 14.x is known. This state of charge is then matched to a prediction of low energy electricity prices in the next 24 hours based on, for example and without limitation, EPEX (European Power Exchange) prices and/or local weather predictions. This enables a recommendation of which charging station 12.x to visit in the next 24 hours. In some embodiments, the determination in step 50 can also be used to reserve a charging station 12.x and set up any pre-authorizations needed for payment so the users can just drive and use the charging station 12.x at the time needed.

In some embodiments in which the server system 20 monitors a large number of vehicles 14.x in a particular locality and information about the activity on a plurality of charging stations 12.x is known, a fair allocation can be proposed even if only a limited number of charging stations 12.x are available at a geographically close charging installation 10 and a distribution of vehicles 14.x to other charging stations at other installations further away makes economic sense.

Alternatively or additionally, as the server system 20 has access to many electric vehicles 14.x across a region the behavior of many drivers is known (so-called swarm intelligence). This behavior can be taken into account when making the prediction in step 50.

In further embodiments, the server system 20 maintains data of how much electric charge a fleet user needs every day. If this is, for example, just 60% of the maximum charge, then on a predicted expensive day the recommendation message 54 can instruct the driver and/or the vehicle 14.x to charge only to 60%, while on other cheaper days the driver and/or the vehicle 14.x will be instructed to charge to 100% so that an energy reserve will be available for expensive days.

The particulars contained in the above description of sample embodiments should not be construed as limitations of the scope of the invention, but rather as exemplifications of some embodiments thereof. Many variations are possible and are immediately apparent to persons skilled in the arts. In particular, this concerns variations that comprise a combination of features disclosed in the present specification. Accordingly, the scope of the invention should be determined not by the embodiments illustrated, but by the appended claims and their legal equivalents.

### LIST OF REFERENCE SIGNS

- 10: charging installation
- 12.x: charging station
- 14.x: (electric) vehicle
- 16.x: (rechargeable) battery
- 18.x: on-board unit
- 20: server system
- 22: network
- 24.1: port (of first vehicle 14.1)
- 26: additional information
- 28: database
- 30.1 / 30.2: first / second status message
- 32.1 / 32.2: first / second instruction message
- 40 - 48: elements of the process shown in Fig. 3
- 50, 52: elements of the process shown in Fig. 4
- 54: recommendation message

## Claims

1. A computer-implemented method executed by a server system (20) for facilitating charging of a plurality of electric vehicles (14.x) at one or more charging stations (12.x), the method comprising:
- receiving (40) a first status message (30.1) from a first on-board unit (18.1) of a first vehicle (14.1) of the plurality of electric vehicles (14.x), the first status message (30.1) indicating a charging status of an ongoing operation of charging the first vehicle (14.1) at a particular charging station (12.1) of the one or more charging stations (12.x);
- determining (44) a predicted time when charging a second vehicle (14.2) of the plurality of electric vehicles (14.x) instead of the first vehicle (14.1) would be preferable, said determining said predicted time being based at least in part on determining how charging the second vehicle (14.2) instead of the first vehicle (14.1) would affect utilization of a charging capacity of the particular charging station (12.1); and
- at least one of:
-- transmitting (46) a first instruction message (32.1) to the first on-board unit (18.1), the first instruction message (32.1) indicating that the ongoing operation of charging the first vehicle (14.1) is to be stopped at the predicted time; or
-- transmitting (48) a second instruction message (32.2) to a second on-board unit (18.2) of the second vehicle (14.2), the second instruction message (32.2) indicating that a new operation of charging the second vehicle (14.2) at the particular charging station (12.1) is to be commenced at the predicted time.

2. The method of claim 1, wherein the charging status of the ongoing operation of charging the first vehicle (14.1) includes one or more of:
- an indication of a current state of charge of a battery (16.1) of the first vehicle (14.1),
- an indication of a current charging power applied to the battery (16.1) of the first vehicle (14.1),
- an indication of a current temperature of the battery (16.1) of the first vehicle (14.1).

3. The method of claim 1 or claim 2, wherein the predicted time is the present time.

4. The method of claim 1 or claim 2, wherein the predicted time is a future time.

5. The method of any of claims 1-4, wherein said determining (44) said predicted time further comprises determining a minimum amount of electrical energy which should be charged into the first vehicle (14.1).

6. The method of any of claims 1-5, wherein said determining (44) said predicted time further comprises evaluating a charge curve which indicates a permissible charging rate for each state of charge of the battery (16.1, 16.2) of the first and/or second vehicle (14.1, 14.2).

7. The method of any of claims 1-6, wherein the second instruction message (32.2) further indicates that the second vehicle (14.2) is to proceed to the particular charging station (14.1).

8. The method of any of claims 1-7, further comprising:
- receiving, at the second on-board unit (18.2), the second instruction message (32.2); and
- automatically setting a navigation system of the second vehicle (14.2) to facilitate arrival of the second vehicle (14.2) at the particular charging station (12.1) at the predicted time.

9. The method of any of claims 1-8, further comprising receiving (42), from the second on-board unit (18.2) and prior to determining (44) the predicted time, a second status message (30.2) indicating a current state of charge of a battery (16.2) of the second vehicle (14.2).

10. The method of any of claims 1-8, wherein determining (44) the predicted time includes accessing a database (28) which stores information about a current state of charge of a battery (16.2) of the second vehicle (14.2).

11. The method of any of claims 1-10, wherein the first on-board unit (18.1) comprises a dongle installed in the first vehicle (14.1).

12. The method of any of claims 1-11, further comprising, prior to commencing the operation of charging the first vehicle (14.1) at the particular charging station (12.1):
- determining (50) a recommended time or time period for commencing the operation of charging the first vehicle (12.1); and
- transmitting a recommendation message (54) to the first vehicle (12.1) or a user associated with the first vehicle (12.1), the recommendation message (54) indicating that an operation of charging the first vehicle (12.1) should be commenced at the recommended time or during the recommended time period.

13. The method of claim 12, wherein determining (50) the recommended time or time period for commencing the operation of charging the first vehicle (12.1) is based on one or more of:
- an electricity price model,
- weather reports,
- traffic predictions,
- historical and/or real-time data of power grid fluctuations, and
- behavioral prediction of vehicle users based on driving and charging history.

14. A machine-readable medium or multiple machine-readable media having program instructions stored thereon, wherein the program instructions are adapted to cause one or more computing devices, when executing the program instructions, to perform operations including the operations recited in any of claims 1-13.

15. A system comprising one or more computing devices, wherein the system is adapted for performing operations including the operations recited in any of claims 1-13.
